# EUROPÄISCHE PATENTSCHRIFT

(11) **EP 2 911 561 B1**
(45) Veröffentlichungstag und Bekanntmachung des Hinweises auf die Patenterteilung: **15.06.2016**
(21) Anmeldenummer: 13783507.0
(22) Anmeldetag: 18.10.2013
(51) Int. Cl.: A47J 43/07, A47J 43/046, A47J 36/10

(54) **ELEKTRISCH BETRIEBENE KÜCHENMASCHINE**
ELECTRICALLY OPERATED KITCHEN APPLIANCE
ROBOT DE CUISINE ÉLECTRIQUE

(30) Priorität: 26.10.2012 DE 102012110239
(43) Veröffentlichungstag der Anmeldung: 02.09.2015
(73) Patentinhaber: Vorwerk & Co. Interholding GmbH, 42275 Wuppertal (DE)
(72) Erfinder: STARFLINGER, Frank, 44793 Bochum (DE)
(74) Vertreter: Müller, Enno
(86) Internationale Anmeldenummer: PCT/EP2013/071815
(87) Internationale Veröffentlichungsnummer: WO 2014/064001

(56) Entgegenhaltungen:
- DE-A1-102011 051 149

## Beschreibung

Die Erfindung betrifft eine elektrisch betriebene Küchenmaschine mit einem Gargefäß und einem Deckel für das Gargefäß, wobei der Deckel in der Verschlussstellung gegen das Gargefäß verriegelbar ist, wobei weiter das Gargefäß einen Gargefäßboden und eine sich vom Boden nach oben erstreckende Gargefäßwandung aufweist, wobei die Gargefäßwandung in einen radial auskragenden Gargefäßrand übergeht, wobei weiter der Deckel einen Deckelrand aufweist, der in der Verschlussstellung in Überdeckung zu dem Gargefäßrand liegt, wobei weiter die Verriegelung durch ein auf den Deckel einwirkendes Verriegelungsteil gebildet ist.

Küchenmaschinen der in Rede stehenden Art sind bekannt. Diese dienen insbesondere im Haushaltsbereich zur Herstellung oder Vorbereitung von Speisen, wozu das der Küchenmaschine zuordbare Gargefäß ausgelegt ist zur Aufnahme von Nahrungsmitteln, beispielsweise Gargütern oder Fluiden. Insbesondere bei beheizbaren Gargefäßen für Küchenmaschinen werden insbesondere im Zuge des Garprozesses teilweise hohe Drücke innerhalb des Gefäßes erreicht. Ist dem Gargefäß weiter insbesondere im Bodenbereich ein Rührwerk zugeordnet, so wirkt im Rührbetrieb gegebenenfalls eine Flüssigkeitssäule unterseitig gegen den auf das Gargefäß aufgesetzten Deckel. Letzterer muss entsprechend an dem Gargefäß verriegelt werden, welche Verriegelung die in dem Gargefäß gegebenenfalls entstehenden Drücke beziehungsweise die auf den Deckel einwirkenden Kräfte aufnehmen kann. In diesem Zusammenhang sind Lösungen bekannt, bei welchen der Deckel beispielsweise über eine bajonettartige Drehverriegelung an dem Gargefäß festsetzbar ist.

Weiter ist eine Küchenmaschine der in Rede stehenden Art beispielsweise aus der DE 10210442 A1 bekannt. Eine weitere Verriegelungsmöglichkeit unter Nutzung eines auf den Deckel einwirkenden Verschwenkteils ist beispielsweise aus der DE 102011051149 A1 bekannt. Hierbei handelt es sich bevorzugt um ein, um eine Verschenkteil-Längsachse drehbare Walzenanordnung, welches walzenartige Verschlussteil in der Deckelverriegelungsstellung insbesondere den Deckelrand zur Sicherung desselben nach vertikal oben überfängt.
Im Hinblick auf den zuvor beschriebenen Stand der Technik beschäftigt sich die Erfindung mit der Aufgabenstellung, eine Küchenmaschine der in Rede stehenden Art hinsichtlich der Deckelhandhabung des Rührgefäßes weiter zu verbessern.

Diese Aufgabe ist beim Gegenstand des Anspruches 1 gelöst, wobei darauf abgestellt ist, dass ein mit dem Deckelrand zusammenwirkendes, elektromotorisch betätigbares Verschwenkteil vorgesehen ist, zum motorischen Verschwenken des Deckels aus einer Schließstellung in eine Öffnungsstellung und dass der Deckel zerstörungsfrei durch den Benutzer vom Verschwenkteil entnehmbar ist. Zufolge dieser Ausgestaltung ist eine Küchenmaschine von erhöhtem Gebrauchswert angegeben.

Insbesondere die Handhabung des im Betrieb das Gargefäß überspannenden Deckels ist im Wesentlichen vereinfacht. Ein der Küchenmaschine zugeordnetes Verschwenkteil zur Schwenkverlagerung des Deckels aus einer Schließstellung in eine Öffnungsstellung und bevorzugt darüber hinaus auch aus einer Öffnungsstellung in die Schließstellung bietet dem Benutzer die Möglichkeit, das Gargefäßinnere freizulegen, ohne hierbei den Deckel selbst zu erfassen.

Über das Verschwenkteil wird der Deckel insbesondere aus der Schließstellung in eine das Gefäßinnere freigebende, zumindest zum großen Teil freigebende Öffnungsstellung verschwenkt, dies weiter insbesondere um eine quer zur zentralen Gargefäßachse verlaufenden Schwenkachse. Die bevorzugt elektromotorische Ansteuerung des Verschwenkteiles bietet eine günstige Handhabung. So ist eine entsprechende Verschwenkung des Deckels aus der einen in die andere Stellung bevorzugt durch Knopfdruck erreichbar, wobei in einer weiter bevorzugten Ausgestaltung auch Zwischenstellungen zwischen der Schließstellung und der Öffnungsstellung des Deckels eingenommen werden können.

Der Deckel ist insbesondere in der Öffnungsstellung werkzeuglos, weiter insbesondere zerstörungsfrei durch den Benutzer von dem Verschwenkteil entnehmbar, um so beispielsweise den Deckel in einfachster Weise reinigen zu können. Gegebenenfalls dient zur Entnahme des Deckels vom Verschwenkteil ein übliches Küchenwerkzeug, insbesondere ein im Zusammenhang mit der Küchenmaschine nutzbares Werkzeug, wie weiter beispielsweise ein das Umwälzen von Gargut in dem Gargefäß unterstützender Spatel oder dergleichen.

Der insgesamt bevorzugt umlaufende Deckelrand setzt sich in bevorzugter Ausgestaltung in der Zuordnungsstellung zum Verschwenkteil in Überdeckung zu dem Verschwenkteil fort, dies in seiner gegebenen geometrischen Grundriss-Bogenform. So ist in bevorzugter Ausgestaltung eine ungerichtete Zuordnung des Deckels zu dem Verschwenkteil erreichbar, weiter insbesondere bei insgesamt kreisrundem Grundriss des Deckels, insbesondere des Deckelrandes. Durch die Zusammenwirkung von Verschwenkteil und Deckel im Bereich des Deckelrandes bleibt in bevorzugter Ausgestaltung die Deckelfläche im Wesentlichen, insbesondere der zentrale Deckelbereich unbeeinflusst von dem auf den Deckel einwirkenden Verschwenkteil.

S In einer weiter bevorzugten Ausgestaltung ist vorgesehen, dass das Verschwenkteil durch einen Form- oder Kraftschluss zur Halterung des Deckels auf den Deckelrand einwirkt, wobei das Verschwenkteil nach Entnahme des Deckels an der Küchenmaschine verbleiben kann. Entsprechend ist der Deckel bevorzugt über eine Form- oder Kraftschlussausbildung an dem Verschwenkteil lösbar gehaltert. Das Verschwenkteil selber ist in bevorzugter Ausgestaltung Bestandteil der Küchenmaschine, verbleibt entsprechend an derselben auch dann, wenn der Deckel entnommen ist. Alternativ ist auch das Verschwenkteil, oder zumindest ein Teilabschnitt des Verschwenkteils einzeln oder auch zusammen mit dem Deckel entnehmbar.

Der Kraftschluss ist bevorzugt durch eine Rast oder eine magnetische Verhaftung erreicht, wobei im Falle einer Rast weiter bevorzugt in dem Verschwenkteil ein gegen Federkraft ausweichbares Rastteil vorgesehen ist, das mit einer Rastausnehmung im Bereich des Deckelrandes zusammenwirkt. Das gegen Federkraft ausweichende Teil kann hierbei ein gesondertes Teil sein, alternativ ist dieses Teil durch die Feder, insbesondere einen Federarm selbst gebildet.

Das Verschwenkteil weist eine Schwenkachse auf, wobei weiter bevorzugt das Verschwenkteil in Erstreckungsrichtung der Schwenkachse langgestreckt ausgebildet ist, so weiter insbesondere langgestreckt walzenförmig.

In weiter bevorzugter Ausgestaltung ist das den Deckel aus der Schließstellung in die Offenstellung verlagernde Verschwenkteil zugleich das Verriegelungsteil des Deckels an dem Gargefäß beziehungsweise an der Küchenmaschine in der Gargefäß-Verschlussstellung.

In einer weiter bevorzugten Ausgestaltung ist vorgesehen, dass die geometrische Achse des Verschwenkteils in ihrer Erstreckung an eine durch einen Deckelrand aufgespannte Ebene angepasst ist. Das Verschwenkteil erstreckt sich bevorzugt zumindest partiell in einer durch den Deckelrand und/ oder den Gefäßrand umlaufend aufnehmenden Ebene, welche in bevorzugter Ausgestaltung quergerichtet ist zu einer vertikal ausgerichteten Gefäßachse. Hierbei verläuft die geometrische Achse weiter bevorzugt horizontal oder schräg zu einer Horizontalen, weiter bevorzugt einen spitzen Winkel von 1° bis 15° oder bis hin zu 30° einnehmend, weiter bevorzugt parallel verlaufend zur Ebene mit einer Toleranz von bevorzugt ± 0,5° bis 30°.

Auch ist bevorzugt vorgesehen, dass die geometrische Achse außerhalb der Gefäßwandung angeordnet ist. Diese geometrische Achse erstreckt sich insbesondere mit radialem Abstand zu einer Außenfläche der Gefäßwandung, weiter bevorzugt mit radialem Abstand außerhalb des der geometrischen Achse höhenmäßig zugeordneten Gefäßwandungsabschnitts, so dass in einer möglichen Ausgestaltung durchaus, bevorzugt mit vertikalem Abstand, oberund/unterhalb der geometrischen Achse diese in einer vertikalen Projektion - mit Bezug auf eine Nutzungsstellung des Gefäßes - die geometrische Achse einen Bereich der Gefäßwandung tangiert oder auch diese durchsetzt. Weiter bevorzugt ist vorgesehen, dass die geometrische Achse die Gefäßwandung im Bereich des höhenmäßig der Achse zugeordneten Gefäßwandungsabschnittes die Gefäßwandung durchsetzt, weiter bevorzugt derart, dass die geometrische Achse über ihre Erstreckung betrachtet mit einem Teilabschnitt durch das Gefäßinnere sich erstreckt, wobei weiter bevorzugt zumindest ein weiterer Teilabschnitt der geometrischen Achse in entsprechender Verlängerung unter Durchsetzung der Gefäßwandung sich außerhalb derselben erstreckt.

In einer weiter bevorzugten Ausgestaltung ist vorgesehen, dass in der Verriegelungsstellung ein Formschluss erreicht ist, wobei zumindest ein Teilabschnitt des Verschwenkteils den Deckel, insbesondere den Deckelrand formschlussartig übergreift. Bevorzugt wirkt der mit dem Deckelrand zusammenwirkende Abschnitt des Verschwenkteiles in der im Betrieb der Küchenmaschine nicht durch Druckbeaufschlagung oder dgl. von innen belasteten Grundstellung des Deckels nicht kraftschlüssig, wenngleich in alternativer Ausgestaltung, weiter gegebenenfalls in Abhängigkeit von der Ausgestaltung der zwischen Deckel und Gefäßwandung bzw. Gefäßrand wirkenden Dichtung, neben dem Formschluss ein derartiger Kraftschluss erreicht sein kann. Zur Bildung des Formschlusses ist insbesondere der der Verriegelung dienende Abschnitt des Verschwenkteiles mit Bezug auf einen Vertikalquerschnitt zumindest abschnittsweise formangepasst an den zu übergreifenden Deckelrand.

Auch ist bevorzugt vorgesehen, dass das Verschwenkteil aus der Freigabestellung in die Verriegelungsstellung und umgekehrt von einer oder beiden Endbereichen drehend antreibbar ist. Unmittelbar angreifend an dem Verschwenkteil, gegebenenfalls aber auch angreifend an einem das Verschwenkteil verlängernden Abschnitt, beispielsweise eine formschlüssig mit dem Verschwenkteil verbundene Antriebswelle, ist zur Verlagerung des Verschwenkteiles dieses per Hand durch den Benutzer erfassbar oder alternativ bzw. kombinativ hierzu antreibbar mittels eines zugeordneten, weiter bevorzugt in der Küchenmaschine entsprechend vorgesehenen Elektromotors. Im Falle des Drehantriebs über einen küchenmaschinenseitigen Elektromotor erfolgt bevorzugt die Verlagerung des Verschwenkteiles in die Verriegelungsstellung oder aus dieser heraus in die Freigabestellung mittels Tastendruck oder dgl., weiter bevorzugt selbsttätig mit Einschalten der Küchenmaschine bzw. Inbetriebnahme einer Heizung der Küchenmaschine und/oder eines Rührwerks der Küchenmaschine. Ist weiter, wie bevorzugt, eine Deckeldetektierung vorgesehen, so ist eine Inbetriebnahme der Küchenmaschine (Heizung und/oder Rührwerk) nur bei ordnungsgemäß aufgesetztem und verriegeltem Deckel möglich. Zudem erstreckt sich die geometrische Achse bevorzugt unterhalb des Gefäßrandes, weiter bevorzugt mit einem vertikalen Abstand zu einer Öffnungsebene des Gefäßes, welcher Abstand bevorzugt einem Zwanzigstel bis einem Fünftel des größten Durchmessers im Bereich des Gefäßrandes entspricht.

Das Verschwenkteil weist einen Übergreifabschnitt auf, der in der Verriegelungsstellung über den Deckelrand zur Sicherung desselben geführt ist. Bevorzugt wird in diesem Zusammenhang, dass sich im Verriegelungszustand an dem Verschwenkteil in Umfangsrichtung des Deckelrandes beabstandet mindestens zwei Übergreifabschnitte einstellen. So ist in der Verriegelungsstellung mittels eines Verschwenkteiles ein sicherndes Übergreifen des Deckels bzw. des Deckelrandes an zwei in Umfangsrichtung zueinander beabstandeten Punkten erreicht. Bevorzugt übergreift jeder Übergreifabschnitt den Deckelrand mit einem vertikalen Spiel im Zehntel-Millimeter-Bereich, weiter bevorzugt mit einem vertikalen Spiel von 0,1 bis 1 mm, wobei weiter das Spiel so gewählt ist, dass eine vertikale Beweglichkeit des Deckels im Betrieb der Küchenmaschine zugelassen wird, ohne hierbei jedoch die durch die bevorzugte Radialdichtung sichergestellte Dichtigkeit zu beeinträchtigen. Zufolge des bevorzugt vorgesehenen Vertikalspiels zwischen Übergreifabschnitt und Deckelrand überfängt der Übergreifabschnitt im Zuge der Verriegelungsverlagerung des Verschwenkteiles sowie in der Verriegelungsstellung frei ohne reib- oder kraftschlüssige Zusammenwirkung mit dem Deckelrand.

Die äußersten Verriegelungsbereiche des Verschwenkteiles sind weiter bevorzugt im Verriegelungszustand um 1/10 bis 1/2 des Deckeldurchmessers zueinander beabstandet, weiter bevorzugt um 1/8 bis 1/3, weiter bevorzugt um 1/4 des Deckeldurchmesser bzw. des mittleren, quer zur vertikalen Achse des Gargefäßes betrachteten Erstreckungsmaßes des Deckels.

Zudem ist bevorzugt, dass das Verschwenkteil den Deckelrand im Querschnitt kreisbogenartig über einen Bereich von 30 bis 90° überdeckt und/oder sich zu diesem bewegt, wobei weiter bevorzugt insbesondere ein Übergreifabschnitt konzentrisch zu der Drehachse des Verschwenkteiles ausgerichtet ist. Weiter bevorzugt erstrecken sich in einem Vertikalschnitt, weiter bevorzugt in Gefäßund Deckelzuordnungsstellung auch der Gefäßrand und/oder der Deckelrand zumindest annähernd konzentrisch zu der Drehachse des Verschwenkteiles, wobei insbesondere bei einer entsprechenden Vertikalquerschnittausgestaltung des Deckelrandes zufolge der bevorzugt konzentrischen Ausrichtung von Deckelrand und Übergreifabschnitt Letzterer den Deckelrand weiter bevorzugt über den gesamten Verlagerungsweg mit einem vertikalen Abstand von wenigen zehntel Millimetern überfängt.

Sowohl die Verriegelungsstellung als auch die Freigabestellung des Verschwenkteils sind weiter bevorzugt anschlagbegrenzt, dies insbesondere zufolge konstruktiver Maßnahmen am Verschwenkteil und/oder an den mit dem Verschwenkteil zusammenwirkenden Partnern, wie Gargefäß und/ oder Deckel. Die Drehbegrenzung des Verschwenkteils kann weiter auch insbesondere bei einem elektromotorischen Antrieb zufolge Ausgestaltung des Elektromotors als Stellmotor gebildet sein, welcher Stellmotor nur eine drehbegrenzte Verlagerung des Verschwenkteiles zulässt. Ist der Anschlag in der Verriegelungsstellung am Deckel ausgebildet, so kann dieser zugleich auch als Detektionsmittel dienen. Ist eine insbesondere elektromotorische Verlagerung des Verschwenkteiles über die Anschlagstellung hinaus ermöglicht, so fehlt der Anschlag und somit der Deckel, welcher zu weite Verriegelungsweg mittels einer entsprechenden Sensorik erfasst wird.

In einer Ausgestaltung sind zwei Verschwenkteile bezüglich einer Mittelachse des Gargefäßes gegenüberliegend angeordnet, womit insgesamt eine zumindest Vier-Punkt-Verriegelung des Deckels an dem Gargefäß erreicht ist. Hierbei verlaufen die Achsen der beiden Verschwenkteile bevorzugt parallel zueinander.

Weiter alternativ sind zwei gegenüberliegende Verschwenkteile vorgesehen, wobei die Achsen der Verschwenkteile mit Bezug auf eine Draufsicht auf das Gargefäß bzw. auf den Deckel einen spitzen Winkel einschließen, so insbesondere einen spitzen Winkel von 30 bis 60°, weiter bevorzugt etwa 45°. Hierdurch sind über den Umfang verteilt mindestens vier den Deckelrand übergreifende Abschnitte vorgesehen, wobei in einer weiter bevorzugten Ausgestaltung mit Bezug auf eine Draufsicht gegenüberliegend zu einem Schnittpunkt der beiden Verriegelungsachsen ein feststehender Übergriff vorgesehen ist, woraus entsprechend sich eine bevorzugte 5-Punkt-Verriegelung des Deckels ergibt.

Bevorzugt wird weiter, dass das Gargefäß in vertikaler Richtung durch das Verschwenkteil gehalten wird, um so notwendige Längetoleranzen zwischen Gargefäß und dem das Gargefäß aufnehmenden Gehäuse der Küchenmaschine gezielt auf der Gefäßunterseite ausgleichen zu können. Hierzu ist vorgesehen, dass das Verschwenkteil einen oder mehrere Auflagebereiche für den Gefäßrand aufweist, so dass das Gargefäß in bevorzugter Ausgestaltung quasi hängend an dem, weiter bevorzugt an den Verschwenkteilen hängt, dies weiter bevorzugt bei entsprechender umlaufender Fassung des Gargefäßes insbesondere im unteren, dem Gefäßboden zugewandten Bereich. Der Auflagebereich ist bevorzugt kugelkopfartig oder ballig ausgebildet, weiter insbesondere mit Bezug auf einen Vertikalquerschnitt ausgebildet zur formschlüssigen Abstützung des entsprechend formangepassten Gefäßrandes. Dieser Auflagebereich ist in Bezug auf die Längserstreckung des Verschwenkteiles bevorzugt mittig zwischen den äußersten Verriegelungsbereichen ausgebildet, so dass entsprechend nach einer Verlagerung des Verschwenkteiles in die Verriegelungsstellung die Übergreifabschnitte in Umfangsrichtung des Deckels betrachtet beidseitig des Auflagebereiches gleichmäßig zu diesem beabstandet den Deckelrand übergreifen.

In weiterer Ausgestaltung weist das Verschwenkteil bevorzugt zwei über den Umfang des Gefäßrandes versetzte Auflagebereiche für den Gefäßrand auf, dies weiter bevorzugt im Zusammenhang mit einer geometrischen Achse, die die Gefäßwandung durchsetzt. Diese bevorzugten zwei Auflagebereiche sind weiter bevorzugt in Erstreckungsrichtung der Achse betrachtet vor und hinter den Durchdringungsstellen der geometrischen Achse durch die Gefäßwandung ausgebildet, dies weiter bevorzugt punktartig, darüber hinaus, wie auch bevorzugt bei nur einem Auflagebereich, linienförmig. Hierdurch ist insbesondere eine Reinigung eines so ausgebildeten Verschwenkteiles weiter verbessert.

Darüber hinaus ist durch die bevorzugte Anordnung von zwei Auflagebereichen weiter insbesondere bei Anordnung von zwei Verschwenkteilen eine insgesamt zumindest Vier-Punkt-Auflage erreicht, wodurch in bevorzugter Ausgestaltung eine genügende Stabilität erreicht ist.

In einer weiter bevorzugten Ausgestaltung ist vorgesehen, dass die Verschwenkeinwirkung auf den Deckel über ein in dem Verschwenkteil vorgesehenes, wahlweise mit dem Deckelrand einwirkendes Einwirkteil erfolgt. Das Einwirkteil ist bevorzugt so eingestellt beziehungsweise einstellbar, dass dieses wahlweise zur Deckelmitnahme im Zuge des Verschwenkens auf den Deckelrand einwirkt oder den Deckelrand zur Entnahme des Deckels aus dem Verschwenkteil freigibt. Hierbei kann an dem Verschwenkteil lediglich ein Einwirkteil vorgesehen sein. Bevorzugt sind mehrere, weiter bevorzugt zwei Einwirkteile einem Verschwenkteil zugeordnet, dies in bevorzugter Ausgestaltung unter Distanzierung zueinander in Erstreckungsrichtung der Schwenkachse des Verschwenkteiles.

Bevorzugt ist das Einwirkteil in Verschwenk-Drehrichtung des Verschwenkteils federnd ausgebildet, wobei die Federkraft weiter bevorzugt so eingestellt ist, dass über das Einwirkteil eine sichere Schwenk-Drehmitnahme des Deckels erreichbar ist. Hierzu ist das Einwirkteil in bevorzugter Ausgestaltung insgesamt eine Feder, weiter bevorzugt eine Spiralfeder, wobei in letzterem Fall die Spiralfeder über einen freien Federschenkel auf den zugeordneten Abschnitt des Deckelrandes zur Schwenkmitnahme des Deckels einwirkt.

Durch elektromotorische Betätigung, insbesondere des Verschwenkteiles, ist in bevorzugter Ausgestaltung das federnd ausgebildete Einwirkteil, weiter insbesondere ein Federarm eines federnd ausgebildeten Einwirkteiles, zwischen einer den Deckel untergreifenden Einwirkstellung und einer Deckel-Freigabestellung bewegbar. In der Einwirkstellung ist der Deckel im Bereich seines Deckelrandes zwischen dem Einwirkteil beziehungsweise zwischen den Einwirkteilen und relativ zu den Einwirkteilen feststehenden Abschnitten des Verschwenkteiles eingespannt. Das oder die Einwirkteile wirken quasi kneifend in Zusammenwirkung mit dem Verschwenkteil auf den Deckelrand ein. Durch weitere elektromotorische Verlagerung insbesondere des Verschwenkteiles, weiter bevorzugt über eine vordefinierte Deckel-Offenstellung hinaus, wird das Einwirkteil in eine Deckel-Freigabestellung bewegt, in welcher die kneifende Wirkung auf den Deckelrand aufgehoben ist. Der Deckel lässt sich hiernach durch den Benutzer in einfachster Weise aus dem Verschwenkteil entnehmen.

Hierbei ist weiter bevorzugt das Bewegen zwischen der Einwirkstellung und der Freigabestellung durch überschnappendes Überlaufen des Einwirkteiles über den Deckelrand erreicht. Hierzu wird bevorzugt so elektromotorisch auf das Einwirkteil eingewirkt, dass in einer bevorzugt anschlagbegrenzten Schwenkendstellung des Deckels und des hierauf einwirkenden Verschwenkteiles die weitere Dreheinwirkung auf das Einwirkteil zu einem Abgleiten insbesondere des auf den Deckelrand einwirkenden Abschnittes des Einwirkteiles führt, so dass insbesondere dieser Abschnitt die, den Deckelrand untergreifende Stellung verliert und, wie weiter bevorzugt, eine den Deckelrand zumindest teilweise übergreifende Stellung einnimmt. Die klemmende Wirkung im Bereich des Deckelrandes ist hierdurch aufgehoben. Zufolge entgegengesetzter Dreheinwirkung auf das Einwirkteil ist bei wieder eingesetztem Deckel in das Verschwenkteil die klemmende Einwirkstellung durch entsprechendes überschnappendes Überlaufen in Richtung auf die Deckelrand-Unterseite erreichbar.

Zufolge einer oder auch mehrerer der zuvor beschriebenen Merkmale ist ein automatischer Deckelhebemechanismus geschaffen, der bei Bedarf den Deckel anhebt, um beispielsweise das Nachfüllen von großvolumigen Zutaten in das Gargefäß zu erleichtern. Beim Schließen des Deckels wird die Deckelpositionierung und somit auch die Dichtungspositionierung bevorzugt selbsttätig eingenommen. Während des Garbetriebs wird der direkte Kontakt des Benutzers mit dem gegebenenfalls heißen Deckel auf ein Minimum reduziert, wobei der Deckel bevorzugt während der gesamten Speisenzubereitungszeit am Gerät verbleibt. Lediglich zur Zwischen- und/oder Entreinigung ist der Deckel vom Gerät zu entnehmen. Am Deckel anhaftende Speisereste können in bevorzugter Ausgestaltung im geöffneten Zustand des Deckels in das Gargefäß zurücktropfen. Das Gargefäß ist weiter zufolge Verschwenken des Deckels in eine Öffnungsstellung jederzeit aus dem Gerät entnehmbar und wieder zuordbar. Der Deckel benötigt durch den Verbleib am Gerät keine zusätzliche Ablagefläche; erzeugt darüber hinaus keine zusätzlichen Verschmutzungen auf einer Ablagefläche. Die vorgeschlagene Ausgestaltung und Wirkung des Einwirkteiles bildet bevorzugt zugleich einen Überlastschutz, schützt entsprechend bevorzugt den aufgerichteten Deckel durch Überrasten vor Beschädigungen bei äußeren Einflüssen.

Nachstehend ist die Erfindung anhand der beigefügten Zeichnung erläutert, die aber lediglich ein Ausführungsbeispiel darstellt. Auf der Zeichnung zeigt:
- Fig. 1: eine Küchenmaschine der in Rede stehenden Art in Seitenansicht mit einem deckelverschlossenen Gargefäß;
- Fig. 2: die Draufsicht zu Figur 1;

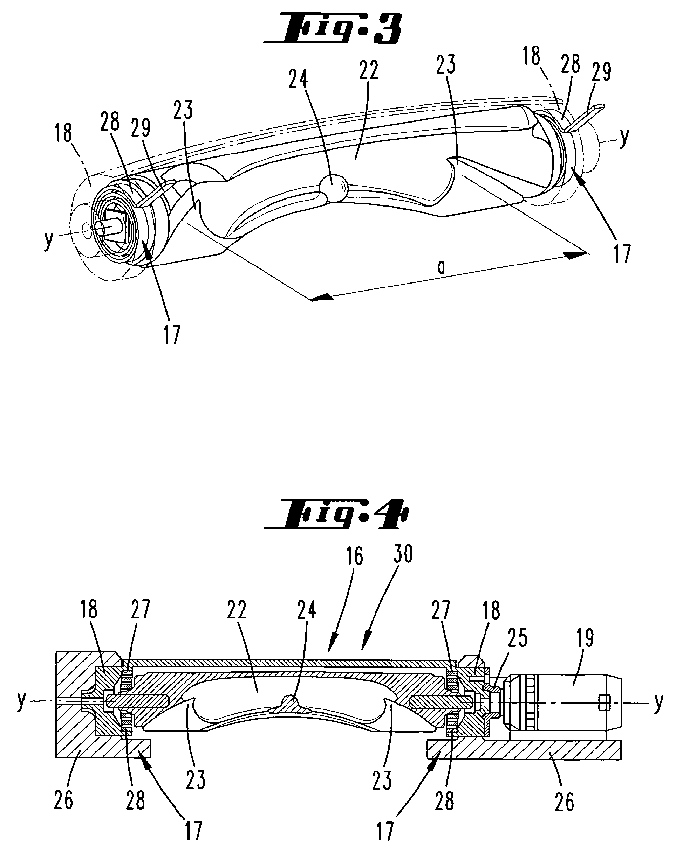

- Fig. 3: ein Verriegelungs- beziehungsweise Verschwenkteil zur Festlegung und zum Aufschwenken des Deckels in perspektivischer Darstellung;
- Fig. 4: den Längsschnitt durch das Verriegelungs- beziehungsweise Verschwenkteil gemäß der Linie IV-IV in Figur 2;
- Fig. 5: den Schnitt gemäß der Linie V-V in Figur 2, eine Deckelverriegelungsstellung betreffend;
- Fig. 6: eine der Figur 5 entsprechende Darstellung, die Deckelentriegelungsstellung betreffend;
- Fig. 7: eine der Figur 6 entsprechende Darstellung bei abgenommenem Deckel;

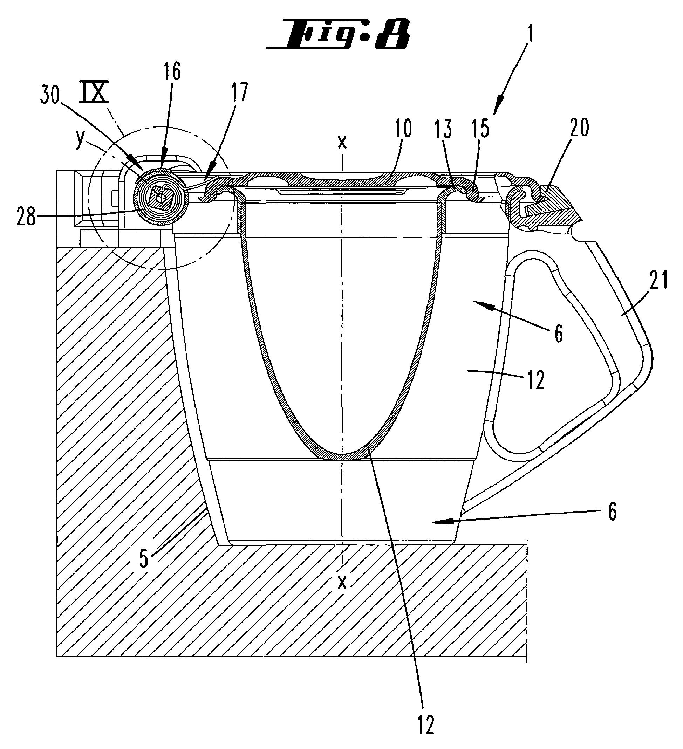

- Fig. 8: den Schnitt gemäß der Linie IV-IV in Figur 2, die Deckelverriegelungsstellung betreffend;

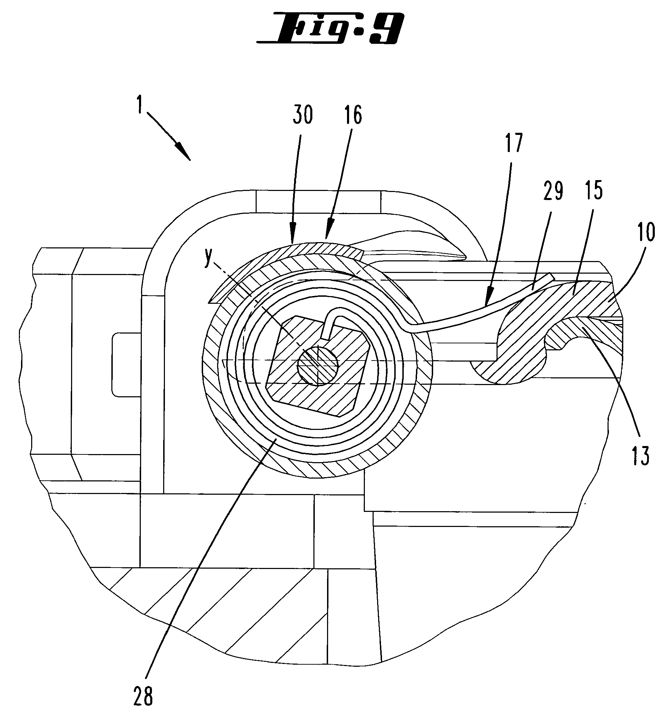

- Fig. 9: die Herausvergrößerung des Bereiches IX in Figur 8;
- Fig. 10: die Draufsicht gemäß Figur 2, eine Zwischenstellung im Zuge der Schwenkverlagerung des Verschwenkteiles in eine den Deckel im Bereich des Deckelrandes klemmende Stellung;

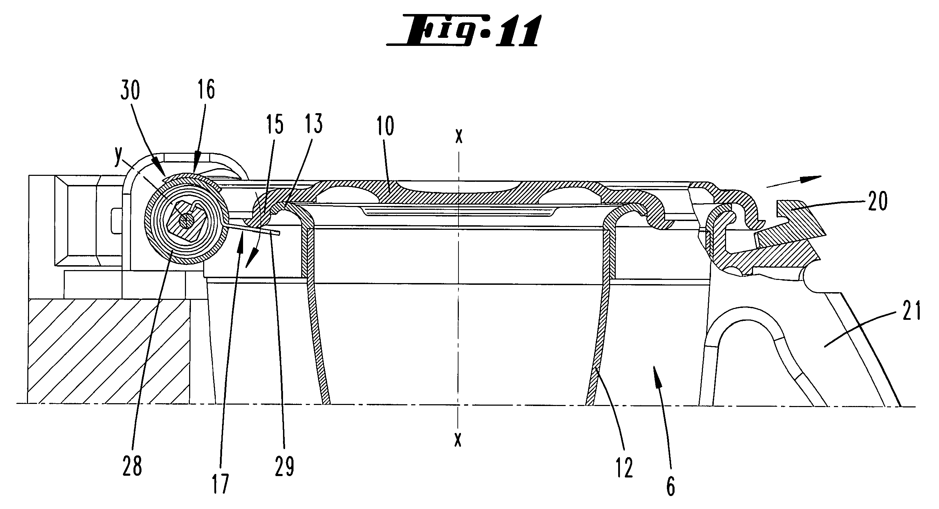

- Fig. 11: eine vergrößerte Schnittdarstellung gemäß Figur 8, die Deckelklemmstellung durch das Verschwenkteil betreffend;

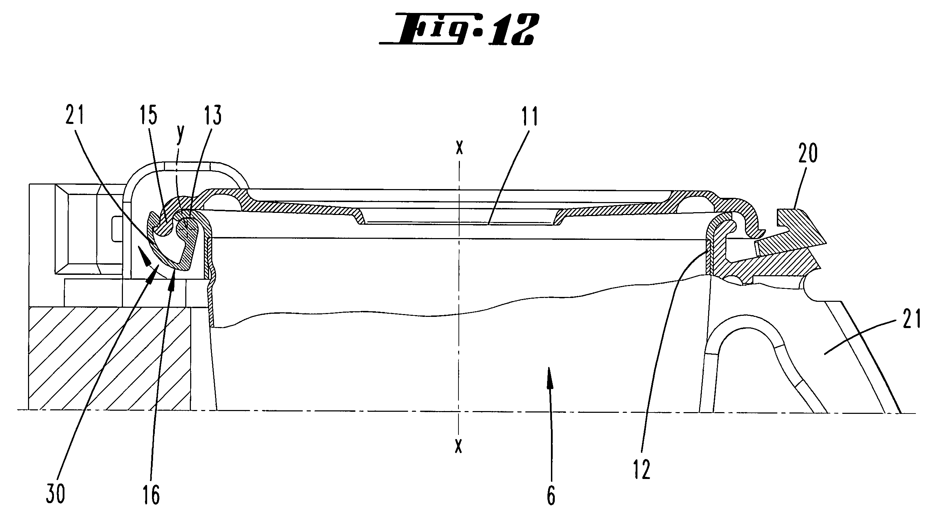

- Fig. 12: den Schnitt gemäß der Linie XII-XII in Figur 2, die Stellung gemäß Figur 11 betreffend;

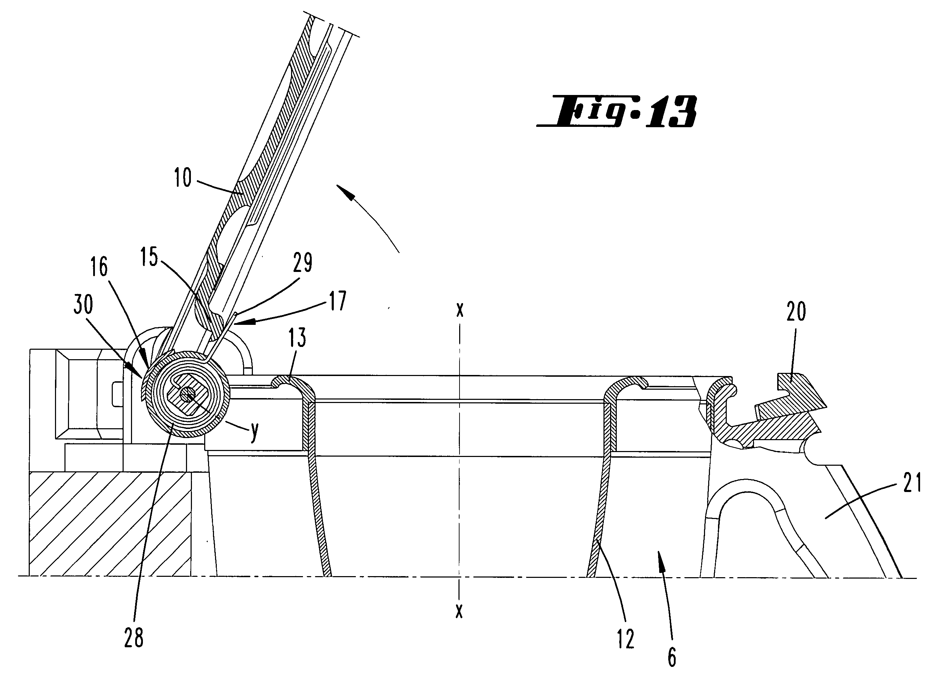

- Fig. 13: eine der Figur 11 entsprechende Schnittdarstellung, jedoch eine Zwischenstellung im Zuge eines Deckelaufschwenkens mittels des Verschwenkteiles betreffend;

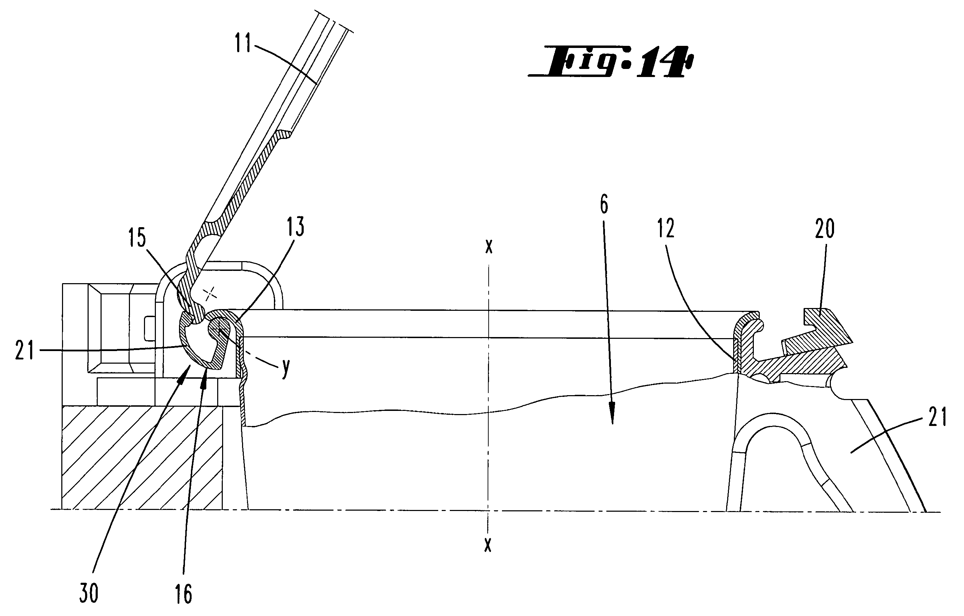

- Fig. 14: eine der Figur 12 entsprechende Schnittdarstellung, die Deckelstellung gemäß Figur 13 betreffend;
- Fig. 15: die Schnittdarstellung gemäß Figur 13, die Deckeloffenstellung, weiter eine Deckel-Freigabestellung betreffend.

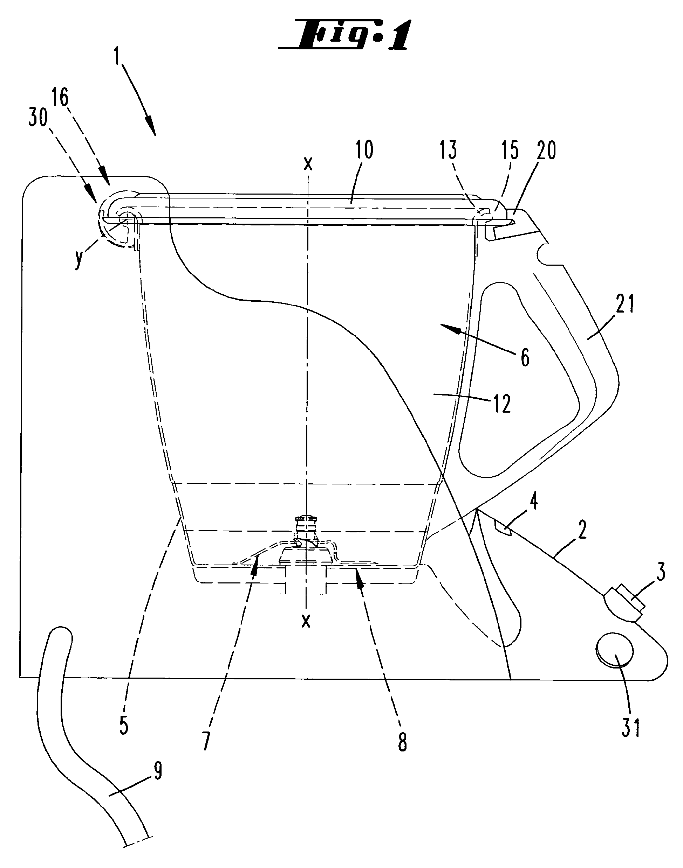

Dargestellt und beschrieben ist zunächst mit Bezug zur Fig. 1 eine elektrisch betriebene Küchenmaschine 1.

Diese weist zunächst ein Bedienfeld 2 auf mit bevorzugt einer Mehrzahl von Reglern und/ oder Tastern 3 sowie bevorzugt ein Display 4 zum Anzeigen der insbesondere über die Regler und/oder Taster 3 einzustellenden Parametern.

Des Weiteren verfügt die Küchenmaschine 1 über eine Gefäßaufnahme 5.

In diese ist ein Gargefäß 6 insbesondere im Fußbereich desselben bevorzugt formschlüssig aufnehmbar und halterbar.

Das Gefäß 6 ist bevorzugt im Wesentlichen rotationssymmetrisch ausgebildet, mit einer zentralen Vertikalachse x.

Im Bodenbereich weist das Gefäß 6 bevorzugt ein Rührwerk 7 auf. Dieses ist in der Zuordnungsstellung des Gefäßes 6 in der Gefäßaufnahme 5 formschlüssig gekoppelt mit einem in der Küchenmaschine 1 vorgesehenen Rührwerkantrieb.

Die Elektroversorgung des Rührwerkantriebs sowie einer weiter bevorzugt behälterbodenseitig vorgesehenen Heizung 8 und darüber hinaus auch der elektrischen Steuerung der gesamten Küchenmaschine 1 ist über ein Netzanschlusskabel 9 erreicht.

Das Gefäß 6 ist weiter insbesondere im Betrieb des Rührwerks 7 und/ oder der Heizung 8 durch einen Deckel 10 verschlossen. Dieser weist bevorzugt zentral, die Vertikalachse x des Gefäßes 6 aufnehmend, eine Einfüllöffnung 11 auf, dies weiter bevorzugt bei insgesamt im Wesentlichen kreisscheibenförmigem Grundriss des Deckels 10.

Das Gefäß 6 weist eine vom Bodenbereich sich in Vertikalrichtung nach oben erstreckende Gefäßwandung 12 auf, die gefäßöffnungsseitig in einen nach radial außen abragenden Gefäßrand 13 übergeht. Letzter ist mit Bezug auf einen Vertikalquerschnitt zumindest annähernd kreislinienabschnittförmig gebildet, weiter bevorzugt halbkreislinienförmig, mit einer nach vertikal oben gerichteten Wölbungsfläche 14.

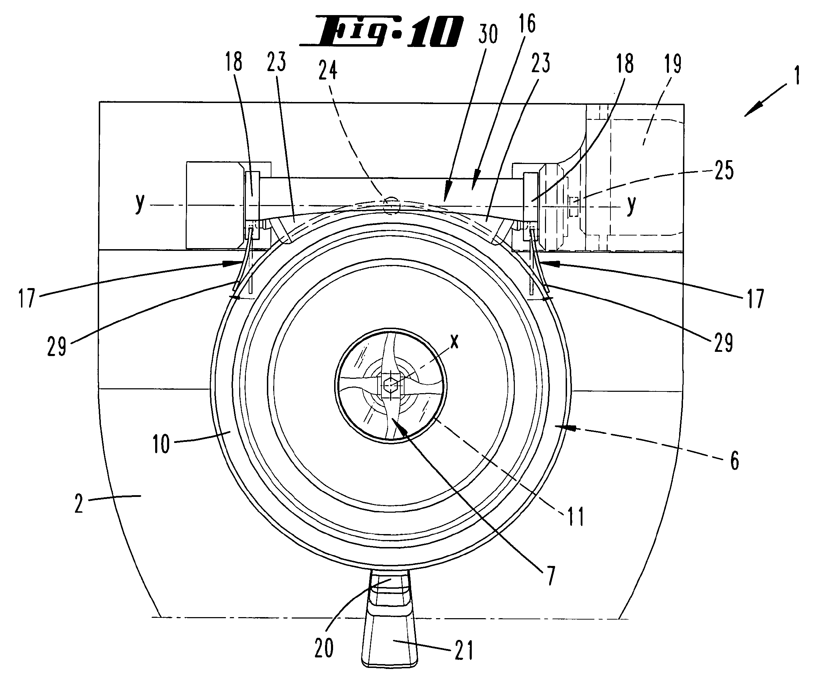

Der Deckel 10 ist mit einem nach radial außen sich erstreckenden Deckelrand 15 versehen. Dieser erstreckt sich mit Bezug auf einen Vertikalschnitt gemäß Fig. 10 angepasst an den Gefäßrand 13 zumindest partiell kreislinienabschnittförmig, weiter bevorzugt in Zuordnungszustellung des Deckels 10 unter teilweisem konzentrischem Verlauf zu dem Gefäßrand 13. In der Zuordnungsstellung stützt sich der Deckel 10 über dessen Deckelrand 15 auf dem Gefäßrand 13 ab.

Wenngleich nicht dargestellt, ist an dem Deckel 10 oder im Bereich des Gefäßrandes 13 eine Dichtung vorgesehen, insbesondere zur fluiddichten Anordnung des Deckels 10 auf dem Gefäß 6. In üblicher Weise besteht eine solche Dichtung aus einem Weichkunststoffmaterial, beispielsweise aus einem thermoplastischen Elastomer.

Insbesondere im Betrieb der Küchenmaschine, weiter insbesondere im Rührwerk- und/oder Heizbetrieb ist der auf das Gefäß 6 aufgesetzte Deckel 10 zu verriegeln, da im Betrieb der Küchenmaschine 1 gegebenenfalls hohe Kräfte beispielsweise durch einen Zerkleinerungsprozess mittels des Rührwerks 7 und/oder durch eine Fluiddynamik im Gefäß 6 entstehen können. Hierzu weist die Küchenmaschine 1 ein Verriegelungsteil 16 auf, welches den Deckel 10 gegen das Gefäß 6 verriegelt. Dieses Verriegelungsteil 16 ist bevorzugt langgestreckt, wellenartig ausgebildet, mit einer zentralen, in Längserstreckung ausgerichteten Achse, welche zugleich eine Drehachse y des Verriegelungsteiles 16 darstellt. Letztere erstreckt sich weiter parallel zu einer durch den Deckelrand 15 bzw. durch den Gefäßrand 13 aufgespannten Ebene.

Weiter ist die Anordnung der Drehachse y so gewählt, dass diese sich bevorzugt radial außerhalb des Gefäßrandes 13, weiter in vertikaler Überdeckung zu dem Gefäßrand 13 unterhalb desselben erstreckt. Hierbei ist weiter bevorzugt, dass die Drehachse y mit Bezug auf einen Vertikalschnitt den Mittelpunkt des kreislinienabschnittförmigen Gefäßrandes 13 schneidet.

Das insgesamt langgestreckt zylinderförmige Verriegelungsteil 16 ist zufolge der vorbeschriebenen Anordnung und Ausrichtung der Drehachse y derart angeordnet, dass dieses mit Bezug auf eine Draufsicht den Gargefäßrand 13 sowie in Zuordnungsstellung den Deckelrand 15 sekantenartig schneidet, wobei in dem dargestellten Ausführungsbeispiel die axiale Länge des Verriegelungsteiles 16 so gewählt ist, dass beide Endbereiche desselben mit Bezug auf eine Draufsicht frei über den sekantenartig, partiell umfassten Randbereich hinausragen.

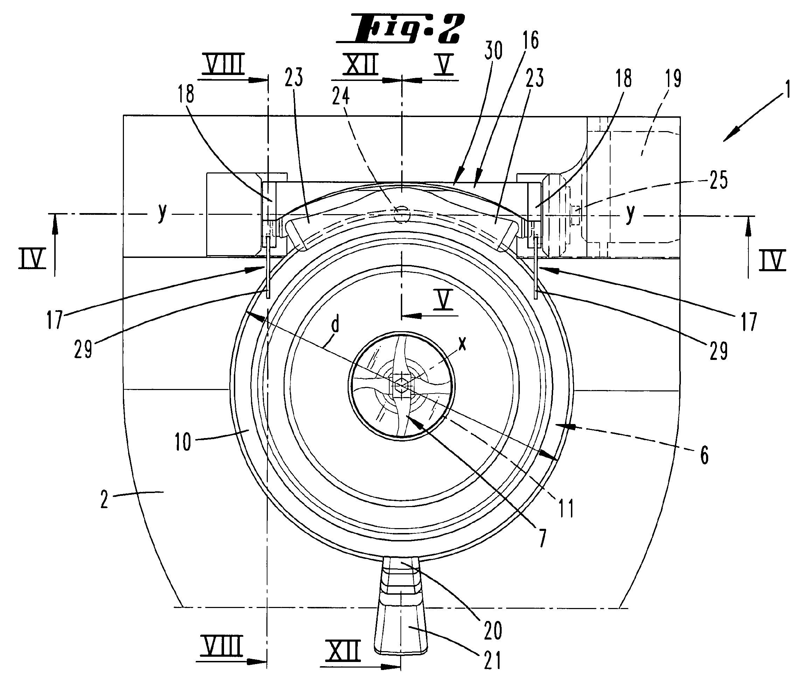

Wie insbesondere aus der Draufsichtdarstellung in Fig. 2 zu erkennen, ist bevorzugt nur ein drehverlagerbares Verriegelungsteil 16 vorgesehen. Mit Bezug auf eine Draufsicht ist diametral gegenüberliegend zu diesem Verriegelungsteil 16 ein durch den Benutzer bevorzugt manuell aufhebbarer Übergriff 20 ausgebildet. Dieser ist bevorzugt im vertikal oberen Endbereich eines an dem Gargefäß 6 befestigten Griffes 21 ausgeformt. Der Übergriff 20 ist bevorzugt so gestaltet, dass dieser in der aufgesetzten Stellung des Deckels 10 auf dem Gefäßrand 13 den Deckelrand 15 zumindest partiell überfängt, wobei allein dieser Übergriff 20 keine Verriegelung darstellt. Diese ist erst erreicht zufolge entsprechender Drehverlagerung des diametral gegenüberliegenden Verriegelungsteiles 16. Zufolge dieser Ausgestaltung ist eine Drei-Punkt-Verriegelung des Deckels 10 erreichbar.

Das insgesamt wellenartige Verriegelungsteil 16 ist mit einer sich in dem dargestellten Ausführungsbeispiel etwa bevorzugt über 60 % bis 70 % der axialen Länge des Verriegelungsteiles 16 erstreckenden Höhlung 22 versehen. Diese ist so gestaltet, dass sich jeweils zugeordnet den in axialer Richtung betrachteten Endbereichen der Höhlung 22 mit Bezug auf einen Vertikalschnitt, das heißt mit Bezug auf einen senkrecht zu der Drehachse y des Verriegelungsteiles 16 betrachteten Schnitt, ein kreisbogenartiger Übergreifabschnitt 23 einstellt. Dieser erstreckt sich bevorzugt konzentrisch zur Drehachse y, wobei der von dem Übergreifabschnitt 23 überdeckte Höhlungsabschnitt hinsichtlich seiner Radialerstreckung als auch hinsichtlich seiner Erstreckung in Umfangsrichtung ausgelegt ist, zur formschlüssigen Aufnahme des Gefäßrandes 13 sowie des Deckelrandes 15 des auf dem Gargefäß 6 aufgesetzten Deckels 10. Der hierbei mit Bezug auf einen Vertikalschnitt sich freikragend erstreckende Übergreifabschnitt 23 erstreckt sich bevorzugt kreisbogenartig, in dem dargestellten Ausführungsbeispiel über einen Bereich von bevorzugt 80°.

Die sich zufolge der vorbeschriebenen Ausgestaltung einstellenden Verriegelungsbereiche im Bereich der Übergreifabschnitte 23 sind in Erstreckungsrichtung der Drehachse y betrachtet um ein Maß a zueinander beabstandet, welches in dem dargestellten Ausführungsbeispiel etwa einem Drittel des Deckeldurchmessers d entspricht.

Weiter in Erstreckungsrichtung der Drehachse y betrachtet ist mittig zwischen den Übergreifabschnitten 23 ein Auflagebereich 24 ausgebildet. Dieser ist bevorzugt kugelkopfartig oder ballenartig ausgeformt, insbesondere mit Bezug auf einen Vertikalschnitt mit einer Auflagefläche, welche konzentrisch zur Drehachse y verläuft und somit weiter bevorzugt in entsprechender Zuordnungsstellung konzentrisch zu dem Verlauf des Gargefäßrandes 13 und/ oder des Deckelrandes 15 in einem Vertikalschnitt.

In dem Auflagebereich 24 ist die Höhlung so gebildet, dass in einer Deckelfreigabestellung sich oberhalb des Auflagebereiches 24 ein freies vertikales Anheben bzw. Absenken des Gargefäßes 6 sowie des Deckels 10 erreichbar ist. Zufolge der insgesamt kreisscheibenförmigen Ausgestaltung des Deckels 10 ist dieser ungerichtet dem Gefäßrand 13 zuordbar.

Die Drehachse y des Verriegelungsteiles 16 erstreckt sich bevorzugt durch das Zentrum des Auflagebereiches 24, um so bei einer Rotation des Verriegelungsteiles 16 die Gefäßposition möglichst konstant zu halten.

Zum Betrieb der Küchenmaschine 1 wird der Deckel 10 zunächst mit einem Teilabschnitt seines Deckelrandes 15 in dem Bereich des Übergriffes 20 eingesetzt, wonach zufolge einer Schwenkverlagerung in Richtung auf den Gefäßrand 13 der Deckel 10 auf das Gargefäß 6 aufgelegt wird.

Zufolge Rotation der Verriegelungsteiles 16 werden die in Axialrichtung zueinander distanzierten Übergreifabschnitte 23 über den Deckelrand 15 verlagert bis hin in eine Endstellung, in welcher bei in Verriegelungsstellung verlagertem Übergriff 20 der verriegelte Zustand des Deckels 10 erreicht ist. Bevorzugt wird hierbei keine axiale Verspannung von Gefäß 6 und Deckel 10 erreicht. Vielmehr wird bevorzugt allein sichergestellt, dass das Gefäß 6 und der Deckel 10 im verriegelten Zustand auch durch hohe Kräfte nicht zu trennen sind. Die Dichtigkeit wird bevorzugt durch die erwähnte Radialdichtung sichergestellt.

Das Verriegelungsteil 16 ist in bevorzugter, wie auch dargestellter Ausführung, im Bereich beider axialer Enden desselben mittelbar unter Zwischenschaltung jeweils eines elastisch nachgebenden Einwirkteils 17 über ein Drehteil 18 maschinengehäuseseitig gelagert. Hierbei ist weiter bevorzugt ein axiales Ende des Verriegelungsteiles 16 mittelbar über das diesem Ende zugeordnete elastisch nachgebende Einwirkteil 17 und dem ebenfalls diesem axialen Ende zugeordnete Drehteil 18 mit einem in der Küchenmaschine 1 angeordneten Elektromotor 19 verbunden. Wie dargestellt, ist bevorzugt die Anordnung des Elektromotors 19 so gewählt, dass dessen Drehachse mit der Drehachse y des Verriegelungsteiles 16 zumindest in einer unbelasteten Ausgangsstellung zusammenfällt. Alternative Lösungen sehen diesbezüglich eine Anordnung eines solchen Elektromotors beispielsweise im Sockelbereich der Küchenmaschine vor, wobei in diesem Fall eine Übersetzung in die Ebene der Drehachse y vorgesehen ist, beispielsweise mittels eines Riementriebs oder dergleichen.

Der Elektromotor 19 verfügt über einen, über diesen drehantreibbaren Wellenstumpf 25. Dieser ist drehfest verbunden mit einem ersten, im wesentlichen massiv aus einem Hartkunststoff- oder Metallmaterial ausgebildeten Drehteil 18, welches weiter bevorzugt über den gesamten Umfang eine Abstützung durch einen Gehäuseabschnitt 26 der Küchenmaschine 1 erfährt.

Die dem Wellenstumpf 25 gegenüberliegende Breitseite des Drehteiles 18 ist mit einer axialen Einsenkung 27 versehen. In dieser ist das elastisch nachgebbare Einwirkteil 17 aufgenommen und gehaltert, welches elastisch nachgebbare Einwirkteil 17 bevorzugt eine spiralförmige Feder 28 ist, weiter bevorzugt hergestellt aus einem Federstahl mit blattfederartigem Querschnitt.

Ein radial innerer Endabschnitt des Einwirkteiles 17 ist unter Durchsetzung eines das Einwirkteil 17 umgebenden Wandungsabschnittes des zugeordneten Drehteiles 18 drehfest mit dem Drehteil 18 verbunden. Der radial äußere Endabschnitt 29 greift in einer Grundstellung oberseitig auf den Deckelrand 16.

Das dem antriebsseitigen Ende gegenüberliegende Ende des Verriegelungsteiles 16 ist bevorzugt in gleicher Weise gehaltert bzw. gelagert. Auch in diesem Bereich ist ein federartiges Einwirkteil 17 sowie ein Drehteil 18 vorgesehen, welches drehfest mit dem anderen Drehteil 18 verbunden ist.

Das Verriegelungsteil 16 formt weiter bevorzugt ein auf den Deckel 10 einwirkendes Verschwenkteil 30 aus. Dieses dient insbesondere in Verbindung mit dem auf dieses Verschwenkteil 30 einwirkenden Elektromotor 19 als elektromotorische Öffnungs- beziehungsweise Aufstellhilfe für den Deckel 10.

Bevorzugt in dem Bedienfeld 2 ist eine Taste 31 oder ein weiterer Schalter vorgesehen, die als Deckel-Öffnungstaste dienend den Elektromotor 19 derart ansteuert, dass sich hierdurch ein Anheben des Deckels 10 zur Freigabe des Behälterinneren ergibt. Dies ist beispielsweise dann von Vorteil, wenn während des Garprozesses und/oder Mixvorganges in dem Gargefäß 6 die Zugabe größerer Mengen an Zutaten vorgesehen ist.

Mit Betätigung der Taste 31 wird über den Elektromotor 19 der Wellenstumpf 25 zunächst weiter in Richtung Deckelverschlussstellung beziehungsweise Deckelverriegelungsstellung drehverlagert (dies weiter bevorzugt unter zeitgleichem Ausschalten des Rührwerkantriebs und/oder der Heizung). Die beiden Drehteile 18 des Verschwenk- beziehungsweise Verriegelungsteiles 30,16 sind drehfest miteinander verbunden, womit die Drehbewegung des Elektromotors 19 auf die Federn 28 übertragen wird. Da das Verriegelungsteil 16 beziehungsweise Verschwenkteil 30 insbesondere in der Oberseite des Deckels 10 beziehungsweise des mit den Übergreifabschnitten 23 zusammenwirkenden Deckelrandes 19 einen Anschlag erfährt, kann das Verriegelungsteil 16 beziehungsweise Verschwenkteil 30 keine weitere Verdrehung vollziehen. Die freien Endabschnitte 29 der Federn 28 werden hingegen relativ zu dem Verriegelungsteil 16 beziehungsweise Verschwenkteil 30 weiter drehverlagert, dies unter Drücken dieser Endabschnitte 29 gegen die Oberfläche des Deckelrandes 15. Die Endabschnitte 29 vollziehen auch zufolge Ansteigen der sich aufbauenden Federkraft eine seitliche Ausweichbewegung bis der Deckelrand 15 überwunden ist. Mit Bezug auf eine Draufsicht gemäß der Darstellung in Figur 2 vollziehen hierbei die Endabschnitte 29 der Federn 28 eine abgleitende Ausweichbewegung in voneinander abweisenden Richtungen. Mit Überlaufen des Deckelrandes 15 schnappen die Endabschnitte 29 der Federn 28 über, zum Unterfangen des Deckelrandes 15 zufolge der nach dem Überlaufen des Deckelrandes 15 freigegebenen Federkraft. Die Endabschnitte 29 der Federn 28 bilden in dieser Stellung eine zusätzliche Lagerstelle, wobei nunmehr zusätzlich zu den Kontaktstellen im Bereich der Übergreifabschnitte 23 und des Auflagebereiches 24 zumindest zwei weitere Kontaktstellen zur Einwirkung auf den Deckelrand 15 gegeben sind. Insbesondere die Übergreifabschnitte 23 wirken zusammen mit den gegen die gegenüberliegende Fläche des Deckelrandes 19 einwirkenden Endabschnitte 29 klemmend auf den Deckelrand 15 ein.

Die Drehung des Wellenstumpfes 25 weiter in Richtung der Verriegelungsstellung erfolgt kurzzeitig, zumindest so lange, bis die Feder-Endabschnitte 29 über den Deckelrand 15 abgeglitten und sich an der Unterseite angelegt haben. Die entsprechende Ansteuerung des Elektromotors 19 erfolgt in einer Ausführungsform zeitlich begrenzt. Alternativ erfolgt die Drehung des Wellenstumpfes 25 über einen vorgegebenen Drehwinkel, der das Abgleiten der Feder-Endabschnitte 29 sicherstellt.

Nach diesem Verdrehen des Wellenstumpfes 25 weiter in Verriegelungsrichtung erfolgt eine Drehrichtungsumkehr des Elektromotors 19, bei welcher der Deckel 10 im Bereich seines durchlaufenden Deckelrandes 15 zwischen den Übergreifabschnitten 23 und den Feder-Endabschnitten 29 eingespannt um die Drehachse y des Verschwenkteiles 30 aufgeschwenkt wird. Hierzu ist zunächst durch den Benutzer der Übergriff 20 bevorzugt manuell aufzuheben, zur entsprechenden ersten Entriegelung des Deckels 10.

Der Deckel 10 ist über das Verschwenkteil 30 bevorzugt in eine Stellung verlagerbar, in welcher eine Deckelebene, bevorzugt eine Dichtebene des Deckels 10 sich in einer vertikal ausgerichteten Ebene erstreckt oder einen spitzen Winkel zu dieser Ebene von 1 bis 15 Grad einschließt.

In dieser Stellung ist das Gargefäß-Innere freigelegt, zum entsprechenden Zugriff auf den Inhalt. In dieser Deckel-Offenstellung ist auch ermöglicht, das Gargefäß 6 aus der Gefäßaufnahme 5 zu entnehmen, beispielsweise zur Entleerung desselben.

Durch erneutes Betätigen der Taste 31, alternativ durch Betätigen einer weiteren Taste, wird ein Zurückschwenken des Deckels 10 in die Gargefäß-Verschlussstellung erreicht, wonach unter Wiederherstellung der Verriegelung im Bereich des Übergriffes 20 die Küchenmaschine 1, insbesondere das Rührwerk 7 in dem Gargefäß 6 und/ oder die Heizung 8 in Betrieb genommen werden kann. Dieser Vorgang lässt sich beliebig oft wiederholen.

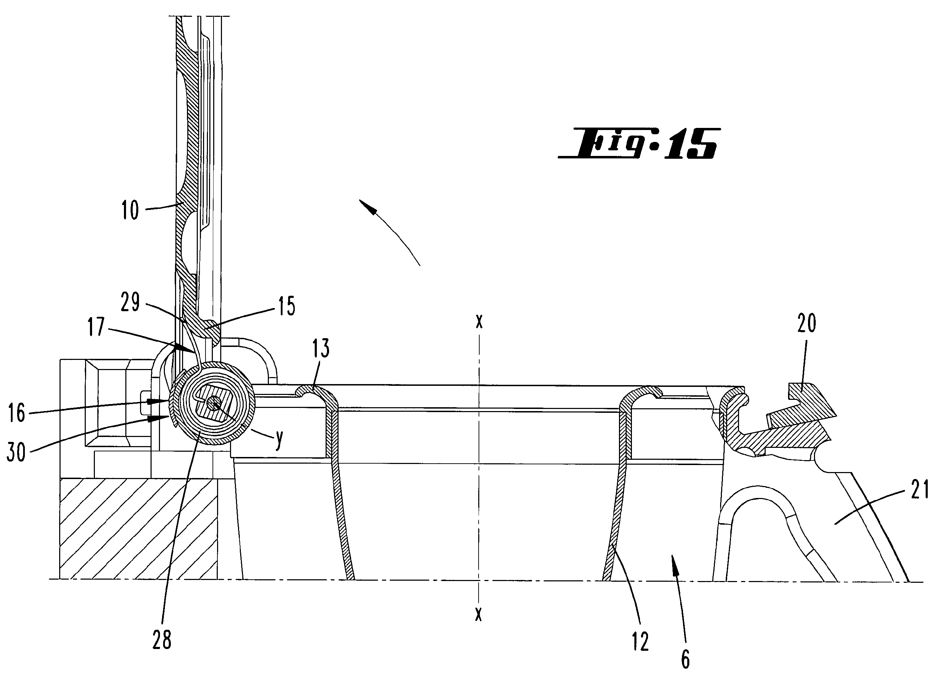

Die in Figur 15 beispielhaft dargestellte Deckel-Offenstellung ist bevorzugt anschlagbegrenzt, weiter bevorzugt zufolge Anschlagen des Verriegelungsteiles 16 beziehungsweise des Verschwenkteiles 30 an einem Gehäuseabschnitt der Küchenmaschine 1. Für den Fall, dass der Deckel 10 beispielsweise zur Reinigung desselben entnommen werden soll, dreht der Elektromotor 19 den Wellenstumpf 25 über die Anschlagposition des Verriegelungsteiles 16 beziehungsweise Verschwenkteiles 30 hinaus, zur entsprechenden Relativverlagerung insbesondere der Endabschnitte 29 der Federn 28 gegenüber dem Deckelrand 15. Die Feder-Endabschnitte 29 gleiten entsprechend über die Unterseite des Deckelrandes 15 ab, um den Deckelrand 15 erneut zu überlaufen und sich hiernach wieder gemäß der Grundposition auf der Deckelrand-Oberseite anzulegen.

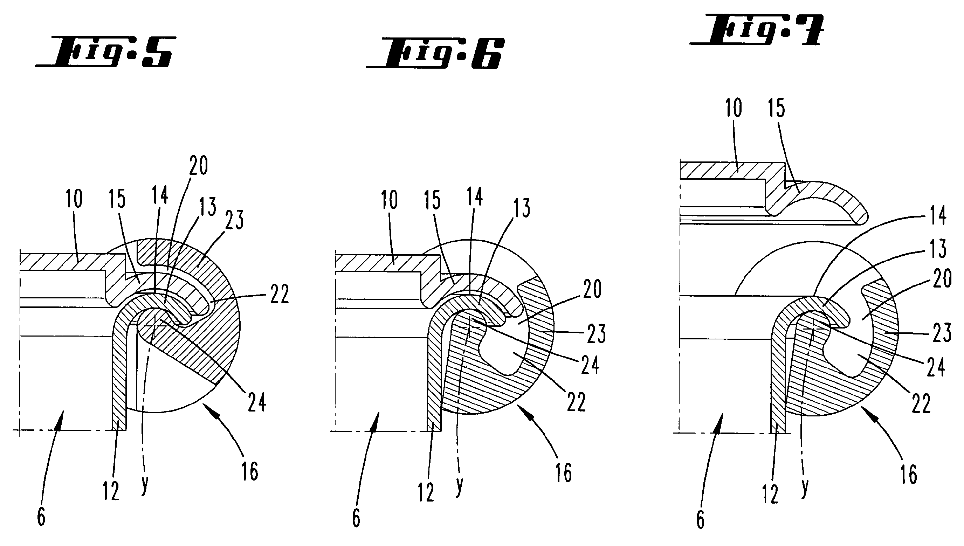

In weiter bevorzugter Ausgestaltung erfolgt die Deckel-Entriegelung in der Deckel-Aufsetzstellung auf dem Gargefäß 6 beziehungsweise auf dem Gargefäßrand 13, dies weiter bevorzugt in der Verriegelungsstellung des Übergriffes 20. Auch hier wird zunächst durch entsprechende Drehverlagerung über den Elektromotor 19 der jeweilige Endabschnitt 29 der Federn 28 derart beaufschlagt, dass dieser über den Deckelrand 15 gleitet und auf die Deckelrand-Oberseite überspringt. Durch weiteres Drehen des Wellenstumpfes 25 in Richtung auf eine Deckel-Offenstellung wird nunmehr auch das Verriegelungsteil 16 beziehungsweise das Verschwenkteil 30 in die Deckel-Entriegelungsstellung gemäß Figur 6 verlagert, wonach nach Aufhebung des Übergriffes 20 der Deckel 10 von dem Gargefäß 6 entnommen werden kann.

Zufolge der vorgeschlagenen Lösung muss der während des Garvorganges gegebenenfalls aufgeheizte Deckel 10 nicht durch den Benutzer unmittelbar berührt werden. Vielmehr erfolgen sowohl die Ver- und Entriegelung, wie auch das Deckelaufstellen beziehungsweise Absetzen desselben auf dem Gefäßrand 13 elektromotorisch gesteuert über die Küchenmaschine 1. Etwaige am Deckel 10 anhaftende Speisereste oder Flüssigkeiten tropfen im geöffneten Zustand des Deckels 10 in das Gargefäß 6 zurück.

Die durch die unterseitige Anlage der Feder-Endabschnitte 29 an dem Deckelrand 15 gebildeten Lagerstellen bilden zugleich einen Überlastschutz insbesondere in der Deckel-Offenstellung, so dass der Deckel 10 in der aufgerichteten Stellung durch Überrasten zufolge äußerer Einflüsse vor einem Bruch geschützt ist.

**Bezugszeichenliste:**

| | | | |
|---|---|---|---|
| 1 | Küchenmaschine | 24 | Auflagebereich |
| 2 | Bedienfeld | 25 | Wellenstumpf |
| 3 | Regler/ Taster | 26 | Gehäuseabschnitt |
| 4 | Display | 27 | Einsenkung |
| 5 | Gefäßaufnahme | 28 | Feder |
| 6 | Gargefäß | 29 | Endabschnitt |
| 7 | Rührwerk | 30 | Verschwenkteil |
| 8 | Heizung | 31 | Taste |
| 9 | Netzanschlusskabel | | |
| 10 | Deckel | | |
| 11 | Einfüllöffnung | | |
| 12 | Gefäßwandung | | |
| 13 | Gefäßrand | a | Abstandsmaß |
| 14 | Wölbungsfläche | d | Deckeldurchmesser |
| 15 | Deckelrand | x | Vertikalachse |
| 16 | Verriegelungsteil | y | Drehachse |
| 17 | Einwirkteil | | |
| 18 | Drehteil | | |
| 19 | Elektromotor | | |
| 20 | Übergriff | | |
| 21 | Griff | | |
| 22 | Höhlung | | |
| 23 | Übergreifabschnitt | | |

## Patentansprüche

1. Elektrisch betriebene Küchenmaschine (1) mit einem Gargefäß (6) und einem Deckel (10) für das Gargefäß (6), wobei der Deckel (10) in der Verschlussstellung gegen das Gargefäß (6) verriegelbar ist, wobei weiter das Gargefäß (6) einen Gargefäßboden und eine sich vom Boden nach oben erstreckende Gargefäßwandung (12) aufweist, wobei die Gargefäßwandung (12) in einen radial auskragenden Gargefäßrand (13) übergeht, wobei weiter der Deckel (10) einen Deckelrand (15) aufweist, der in der Verschlussstellung in Überdeckung zu dem Gargefäßrand (13) liegt, wobei weiter die Verriegelung durch ein auf den Deckel (10) einwirkendes Verriegelungsteil (16) gebildet ist, **dadurch gekennzeichnet, dass** ein mit dem Deckelrand (15) zusammenwirkendes, elektromotorisch betätigbares Verschwenkteil (30) vorgesehen ist, zum motorischen Verschwenken des Deckels (10) aus einer Schließstellung in eine Öffnungsstellung und dass der Deckel (10) zerstörungsfrei durch den Benutzer vom Verschwenkteil (30) entnehmbar ist.

2. Küchenmaschine nach Anspruch 1, **dadurch gekennzeichnet, dass** das Verschwenkteil (30) durch einen Form- oder Kraftschluss zur Halterung des Deckels (10) auf den Deckelrand (15) einwirkt, wobei das Verschwenkteil (30) nach Entnahme des Deckels (10) an der Küchenmaschine (1) verbleiben kann.

3. Küchenmaschine nach Anspruch 2, **dadurch gekennzeichnet, dass** der Kraftschluss durch eine Rast oder magnetische Verhaftung erreicht ist.

4. Küchenmaschine nach einem der vorhergehenden Ansprüche, **dadurch gekennzeichnet, dass** das Verschwenkteil (30) eine Schwenkachse (y) aufweist und in Erstreckungsrichtung der Schwenkachse (y) lang gestreckt ausgebildet ist.

5. Küchenmaschine nach einem der vorhergehenden Ansprüche, **dadurch gekennzeichnet, dass** eine geometrische Achse des Verschwenkteils (30) in ihrer Erstreckung an eine durch einen Deckelrand (15) aufgespannte Ebene angepasst ist.

6. Küchenmaschine nach Anspruch 5, **dadurch gekennzeichnet, dass** die geometrische Achse außerhalb der Gefäßwandung (12) angeordnet ist.

7. Küchenmaschine nach Anspruch 5, **dadurch gekennzeichnet, dass** die geometrische Achse die Gefäßwandung (12) durchsetzt.

8. Küchenmaschine nach einem der Ansprüche 5 oder 6, **dadurch gekennzeichnet, dass** sich die geometrische Achse unterhalb des Gargefäßrandes (13) erstreckt.

9. Küchenmaschine nach einem der vorhergehenden Ansprüche, **dadurch gekennzeichnet, dass** das Verschwenkteil (30) aus der Freigabestellung in die Verriegelungsstellung und umgekehrt von einer oder beiden Endbereichen drehend antreibbar ist.

10. Küchenmaschine nach einem der vorhergehenden Ansprüche, **dadurch gekennzeichnet, dass** sich im Verriegelungszustand des Deckels (10) mit dem Verschwenkteil (30) in Umfangsrichtung des Deckelrandes (15) beabstandet mindestens zwei Übergreifabschnitte (23) einstellen.

11. Küchenmaschine nach einem der vorhergehenden Ansprüche, **dadurch gekennzeichnet, dass** äußerste Verriegelungsbereiche des Verschwenkteils (30) im Verriegelungszustand um 1/10 bis ½ des Deckeldurchmessers (d) zueinander beabstandet sind.

12. Küchenmaschine nach einem der vorhergehenden Ansprühe, **dadurch gekennzeichnet, dass** das Verschwenkteil (30) den Deckelrand (15) im Querschnitt kreisbogenartig über einen Bereich von 30 bis 90° überdeckt und/ oder sich zu diesem bewegt.

13. Küchenmaschine nach einem der vorhergehenden Ansprüche, **dadurch gekennzeichnet, dass** das Verschwenkteil (30) einen oder mehrere Auflagebereiche (24) für den Gefäßrand (13) aufweist und/ oder, bevorzugt, dass der Auflagebereich (24) kugelkopfartig ausgebildet ist und/ oder, bevorzugt, dass der Auflagebereich (24) in Bezug auf die Längserstreckung des Verschwenkteils (30) mittig zwischen den äußersten Verriegelungsbereichen ausgebildet ist und/ oder, bevorzugt, dass das Verschwenkteil (30) zwei über den Umfang des Gefäßrandes (13) versetzte Auflagebereiche (24) für den Gefäßrand (13) aufweist.

14. Küchenmaschine nach einem der vorhergehenden Ansprüche, **dadurch gekennzeichnet, dass** die Verschwenkeinwirkung auf den Deckel (10) über ein in dem Verschwenkteil (30) vorgesehenes, wahlweise mit dem Deckelrand (15) einwirkendes Einwirkteil (17) erfolgt und/oder, bevorzugt, dass das Einwirkteil (17) in Verschwenk-Drehrichtung des Verschwenkteils (30) federnd ausgebildet ist und/ oder, bevorzugt, dass das Einwirkteil (17) eine Feder (28) ist und/oder, bevorzugt, dass das Einwirkteil (17) eine Spiralfeder ist.

15. Küchenmaschine nach einem der vorhergehenden Ansprüche, **dadurch gekennzeichnet, dass** das federnd ausgebildete Einwirkteil (17) durch elektromotorische Betätigung zwischen einer den Deckel (10) untergreifenden Einwirkstellung und einer Deckel-Freigabestellung bewegbar ist und/ oder, bevorzugt, dass das Bewegen zwischen der Einwirkstellung und der Freigabestellung durch Überlaufen des Deckelrandes (15) erreicht ist.

## Claims

1. An electrically operated kitchen appliance (1), comprising cooking vessel (6) and a lid (10) for the cooking vessel (6), wherein the lid (10) can be locked in the closed position against the cooking vessel (6), wherein the cooking vessel (6) further has a cooking vessel base and a cooking vessel wall (12) extending upwards from the base, wherein the cooking vessel wall (12) transitions into a radially projecting cooking vessel edge (13), wherein the lid (10) furthermore has a lid edge (15), which covers the cooking vessel edge (13) in the closed position, wherein the lock is furthermore formed by a locking part (16) acting on the lid (10), **characterized in that** a hinged section (30), which interacts with the lid edge (15) and which can be operated by an electric motor, is provided for pivoting the lid (10) from a closed position into an open position by a motor and for the lid (10) to be capable of being removed from the hinged section (30) by the user non-destructively.

2. The kitchen appliance according to claim 1, **characterized in that** the hinged section (30) acts on the lid edge (15) by means of a positive locking or frictional connection for holding the lid (10), wherein the hinged section (30) can remain at the kitchen appliance (1) after removing the lid (10).

3. Kitchen appliance according to claim 2, **characterized in that** the frictional connection is attained by means of a detent or magnetic adhesion.

4. The kitchen appliance according to one of the preceding claims, **characterized in that** the hinged section (30) encompasses a pivot axis (y) and is embodied so as to be elongated in the direction of extension of the pivot axis (y).

5. Kitchen appliance according to one of the preceding claims characterized that the geometric axis of the hinged section (30) in its extension is adapted to a plane, which is spanned by a lid edge (15).

6. The kitchen appliance according to claim 5, **characterized in that** the geometric axis is arranged outside of the vessel wall (12).

7. Kitchen appliance according to claim 5, **characterized in that** the geometric axis permeates the vessel wall (12).

8. Kitchen appliance according to one of the claims 5 or 6, **characterized in that** the geometric axis extends below the vessel edge (13).

9. The kitchen appliance according to one of the preceding claims, **characterized in that** the hinged section (30) is rotatably drivable from the released position into the locked position and vice versa from one or both end areas.

10. The kitchen appliance according to one of the preceding claims, **characterized in that** at least two overlap sections (23) set in in the locked state of the lid (10) with the hinged section (30) in circumferential direction of the lid edge (15) at a distance from one another.

11. The kitchen appliance according to one of the preceding claims, **characterized in that** outermost locking areas of the hinged section (30) are spaced apart from one another by 1/10 to 1/2 of the lid diameter (d).

12. Kitchen appliance according to one of the preceding claims, **characterized in that** the hinged section (30) covers the lid edge (15) with a circular arc-like cross section across an area of between 30 and 90° and/or moves towards it.

13. The kitchen appliance according to one of the preceding claims, **characterized in that** the hinged section (30) encompasses one or a plurality of contact areas (24) for the vessel edge (13) and/or, preferably, that the contact area (24) is embodied in a spherical head-shaped manner and/or, preferably, that the contact area (24) is embodied centrally between the outermost locking areas relative to the longitudinal extension of the hinged section (30) and/or, preferably, that the hinged section (30) encompasses two contact areas (24) for the vessel edge (13), offset across the circumference of the vessel edge (13).

14. The kitchen appliance according to one the preceding claims, **characterized in that**, the pivot effect on the lid (10) occurs via an acting part (17), which is provided in the hinged section (30) and which optionally acts on the lid edge (15) and/or, preferably, that the acting part (17) is embodied so as to be resilient in pivot direction-direction of rotation of the hinged section (30) and/or, preferably, that the acting part (17) is a spring (28) and/or, preferably, that the acting part (17) is a coil spring.

15. The kitchen appliance according to one of the preceding claims, **characterized in that** the acting part (17), which is embodied so as to be resilient, can be moved between an acting position, which reaches under the lid (10), and a lid release position by operation by means of an electric motor and/or, preferably, that the movement between the acting position and the release position is reached by overtraveling the lid edge (15).

## Revendications

1. Robot de cuisine électrique (1) ayant une cuve de cuisson (6) et un couvercle (10) pour la cuve de cuisson (6), dans lequel le couvercle (10) est verrouillable dans la position de fermeture contre la cuve (6), dans lequel en outre la cuve de cuisson (6) présente un fond et une paroi (12) s'étendant vers le haut à partir du fond, dans lequel la paroi (12) de la cuve évolue en un bord de cuve (13) en saillie radiale, dans lequel en outre le couvercle (10) présente un bord de couvercle (15) lequel est disposé, dans la position de fermeture, en recouvrement du bord de cuve (13), dans lequel en outre le dispositif de verrouillage est formé par un élément de verrouillage (16) agissant sur le couvercle (10), **caractérisé en ce qu'**est prévue une partie pivotante (30) coopérant avec le bord du couvercle (15) laquelle est actionnée par moteur électrique pour pivoter de manière motorisée le couvercle (10) d'une position fermée dans une position ouverte et **en ce que** le couvercle (10) est détachable de la partie pivotante (30) de manière non destructive par l'utilisateur.

2. Robot de cuisine selon la revendication 1, **caractérisé en ce que** la partie pivotante (30) agit sur le bord (15) du couvercle par une liaison de forme ou à force pour maintenir le couvercle (10), dans lequel la partie pivotante (30) peut rester sur le robot de cuisine (1) après enlèvement du couvercle (10).

3. Robot de cuisine selon la revendication 2, **caractérisé en ce que** la liaison à force est obtenue par une liaison par accrochage ou une liaison magnétique.

4. Robot de cuisine selon l'une des revendications précédentes, **caractérisé en ce que** la partie pivotante (30) présente un axe de pivotement (y) et est formée de manière à s'étendre longitudinalement selon la direction d'extension de l'axe de pivotement (y).

5. Robot de cuisine selon l'une des revendications précédentes, **caractérisé en ce qu'**un axe géométrique de la partie pivotante (30) est adapté suivant son extension à un plan contenant le bord (15) du couvercle.

6. Robot de cuisine selon la revendication 5, **caractérisé en ce que** l'axe géométrique est agencé en-dehors de la paroi (12) de la cuve.

7. Robot de cuisine selon la revendication 5, **caractérisé en ce que** l'axe géométrique traverse la paroi (12) de la cuve.

8. Robot de cuisine selon l'une des revendications 5 ou 6, **caractérisé en ce que** l'axe géométrique s'étend en-dessous du bord (13) de la cuve de cuisson.

9. Robot de cuisine selon l'une des revendications précédentes, **caractérisé en ce que** la partie pivotante (30) est susceptible d'être entrainée en rotation de la position déverrouillée à la position verrouillée et vice-versa depuis une région d'extrémité ou les deux.

10. Robot de cuisine selon l'une des revendications précédentes, **caractérisé en ce que** dans l'état verrouillé du couvercle (10), au moins deux parties de recouvrement (23) se positionnent avec la partie pivotante (30) en étant espacée dans la direction circonférentielle du bord (15) du couvercle.

11. Robot de cuisine selon l'une des revendications précédentes, **caractérisé en ce que** des régions de verrouillage les plus extérieures de la partie pivotante (30) sont, dans l'état verrouillé, espacées entre elles de 1/10 à 1/2 du diamètre (d) du couvercle.

12. Robot de cuisine selon l'une des revendications précédentes, **caractérisé en ce que** la partie pivotante (30) recouvre, en section transversale, le bord (15) du couvercle de manière incurvée sur une région de 30 à 90° et/ou se déplace vers celui-ci.

13. Robot de cuisine selon l'une des revendications précédentes, **caractérisé en ce que** la partie pivotante (30) présente une ou plusieurs régions d'appui (24) pour le bord de cuve (13) et/ou que préférentiellement la région d'appui (24) est formée à la manière d'une tête sphérique et/ou que préférentiellement la région d'appui (24) est formée, en référence à l'extension longitudinale de la partie pivotante (30), au milieu entre les régions de verrouillage les plus extérieures et/ou que préférentiellement la partie pivotante (30) présente deux régions d'appui (24) pour le bord de cuve (13) qui sont décalées sur la circonférence du bord de cuve (13).

14. Robot de cuisine selon l'une des revendications précédentes, **caractérisé en ce que** l'action en pivotement sur le couvercle (10) est réalisé au moyen d'un élément d'actionnement (17) agencé dans la partie pivotante (30) et lequel optionnellement agit sur le bord (15) du couvercle et/ou que préférentiellement l'élément d'actionnement (17) est élastique dans la direction de pivotement de la partie pivotante (30) et/ou que préférentiellement l'élément d'actionnement (17) est un ressort et/ou que préférentiellement l'élément d'actionnement (17) est un ressort en spirale.

15. Robot de cuisine selon l'une des revendications précédentes, **caractérisé en ce que** l'élément d'actionnement réalisé élastique (17) est déplaçable par un moteur électrique entre une position d'actionnement en engagement sous le couvercle et une position de libération du couvercle et/ou que préférentiellement le déplacement entre la position d'actionnement et la position de libération est obtenu par dépassement du bord (15) du couvercle.
